# EUROPÄISCHE PATENTSCHRIFT

(11) **EP 3 497 016 B1**
(45) Veröffentlichungstag und Bekanntmachung des Hinweises auf die Patenterteilung: **08.07.2020**
(21) Anmeldenummer: 17757695.6
(22) Anmeldetag: 07.08.2017
(51) Int. Cl.: B64C 39/02, G01M 5/00

(54) **UNBEMANNTES LUFTFAHRZEUG ZUR ZERSTÖRUNGSFREIEN PRÜFUNG EINER DREIDIMENSIONALEN STRUKTUR**
UNMANNED AIRBORNE VEHICLE FOR THE NON-DESTRUCTIVE TESTING OF A THREE-DIMENSIONAL STRUCTURE
DRONE POUR LE CONTRÔLE NON DESTRUCTIF D'UNE STRUCTURE TRIDIMENSIONNELLE

(30) Priorität: 08.08.2016 DE 102016214655
(43) Veröffentlichungstag der Anmeldung: 19.06.2019
(73) Patentinhaber: Fraunhofer-Gesellschaft zur Förderung der angewandten Forschung e.V., 80686 München (DE)
(72) Erfinder: MORYSON, Ralf, 66787 Wadgassen (DE); PUDOVIKOV, Sergey, 66123 Saarbrücken (DE); RABE, Ute, 66119 Saarbrücken (DE); JÄCKEL, Patrick, 66583 Elversberg (DE); NIESE, Frank, 49809 Lingen (DE); HERRMANN, Hans-Georg, 66132 Saarbrücken (DE)
(74) Vertreter: Rösler, Uwe
(86) Internationale Anmeldenummer: PCT/EP2017/069923
(87) Internationale Veröffentlichungsnummer: WO 2018/029138

(56) Entgegenhaltungen:
- EP-A1- 3 062 066
- EP-A2- 1 193 168
- WO-A1-2012/013878
- WO-A1-2016/065623
- CA-A1- 2 888 017
- ES-A1- 2 614 994
- FR-A1- 3 003 361
- JP-A- 2012 145 346
- JP-A- 2016 109 557
- TAKEHIRO HIGUCHI ET AL: "Control system design for visual based indoor inspection helicopter", SICE ANNUAL CONFERENCE 2010, PROCEEDINGS OF, IEEE, PISCATAWAY, NJ, USA, 18. August 2010 (2010-08-18), Seiten 811-816, XP031776463, ISBN: 978-1-4244-7642-8

## Beschreibung

### Technisches Gebiet

Die Erfindung bezieht sich auf ein System zum zerstörungsfreien Untersuchen eines über wenigstens eine frei zugängliche Oberfläche verfügenden dreidimensionalen Objektes, mit einem zu einem Schwebeflugzustand befähigten unbemannten Luftfahrzeug, kurz UAV, an dem eine Inspektionseinheit sowie eine Kontaktvorrichtung angeordnet sind, über die ein lösbarer Kontakt zwischen dem UAV und der Oberfläche des Objektes herstellbar ist.

Relevante Inspektion großer Industrieanlagen sowie großer Infrastrukturbauwerke, wie bspw. Brücken, Staumauern, Industrieanlagen etc. sind zeit- und kostenaufwendige Angelegenheiten, zumal die zum Teil sehr groß bauenden Objekte je nach Prüfauftrag zum Teil sehr kleinteilig geprüft werden müssen, um eine ausreichende Empfindlichkeit gegenüber relevanten Fehlergrößen, wie bspw. Materialrissen, Materialdegradationen oder sonstigen Inhomogenitäten, zu erreichen. Um aussagekräftige Informationen über den bautechnischen Zustand eines Objektes zu gewinnen, reichen bloße optische Inspektionen, die mit bloßem Auge oder mit entsprechend hochauflösenden Kamerasystemen gewonnen werden können, meist nicht aus. Vielmehr gilt es zerstörungsfreie Prüfverfahren anzuwenden, mit denen Aussagen über die innere Beschaffenheit der Objekte getroffen werden können. Hierzu werden ohne jegliche Strukturbeeinflussung des zu untersuchenden Objektes elektromagnetische und/oder mechanische Wellen, bspw. in Form von Ultraschallwellen, in das zu untersuchende Objekt eingekoppelt und nach entsprechender Wechselwirkung zwischen den Wellen und inneren Bereichen des Objektes teilweise detektiert und analysiert. Die hierfür geeigneten zerstörungsfreien Prüfsensoren, kurz ZFPS, gilt es vorzugsweise oberflächenkontaktierend oder zumindest sehr nahe an bzw. über der Oberfläche des Objektes während der Prüfung zu positionieren, um belastbare Messsignale zu erhalten.

### Stand der Technik

Die eingangs bezeichneten Inspektionsaufgaben an frei zugänglichen Oberflächen von dreidimensionalen Objekten, insbesondere von Bauwerken aller Art, unter Verwendung an sich bekannter zerstörungsfreier Prüfverfahren werden in den meisten Fällen von Personen unter Verrichtung manueller Prüfsensorhandhabung durchgeführt. Insbesondere bei sehr hohen und/oder komplexen Konstruktionen bzw. Anlagen oder Bauwerken übernehmen spezialisierte Industriekletterer derartige Aufgaben, wodurch eine vollständige Überprüfung der zu untersuchenden Anlagen oder Bauwerke sehr zeit- und damit auch kostenintensiv ausfällt.

Zur Untersuchung großflächiger, ebener Betonflächen, wie bspw. Parkdecks sind eigenfortbewegungsfähige Plattformen mit daran angebrachten zerstörungsfrei arbeitenden Prüfsensoren bekannt, die zu Zwecken der Zustandsdiagnose, die im Rahmen einer Qualitätssicherung nach einer Sanierung oder eines Neubaus auf den Erfolg einer fachgerechten Ausführung schließen lassen, eingesetzt werden, siehe hierzu "Parkdeckmultisensorik - selbstfahrendes Scannersystem für Betonflächendiagnosen (Betoscan), VDI/VDE-IT 150/09/06/AZ.

Ferner ist unter der Bezeichnung "OSSCAR-Bauwerkscanner" eine multisensorielle mobil einsetzbare Plattform bekannt, die einen mobil einsetzbaren Trägerrahmen umfasst, der vor Ort an zu untersuchende Bauwerkswände lösbar fest anbringbar ist und eine zweidimensionale Messebene aufspannt, längs der ein multifunktioneller, zerstörungsfreier Prüfsensorkopf verfahrbar gelagert ist, siehe hierzu Artikel von A. Taffe, T. Kind, M. Stoppel, H. Wiggenhauer, "Osscar-Development of an On-side scanner for automated non-destructive bridge testing", BAM, 2009.

Automatisierte Systeme für eine möglichst großflächige Objektuntersuchung unter Nutzung zerstörungsfreier Prüfverfahren nutzen an sich bekannte sich autonom fortbewegende Plattformen, an denen wenigstens ein zerstörungsfreier Prüfsensor angebracht ist. Bisher bekannte Systeme beschränken sich jedoch auf bodengebundene Plattformen oder wandgebundene Trägersysteme, die allesamt zum Zwecke der Eigenfortbewegung stets im körperlichen Kontakt mit dem jeweils zu untersuchenden Objekt stehen.

Darüber hinaus existieren flugfähige Systeme, die über die Fähigkeit verfügen, sich dreidimensional relativ zu einem zu untersuchenden Objekt weitgehend frei zu positionieren. Derartige, vorzugsweise zur Ausübung eines Schwebeflugzustandes befähigte Flugplattformen, die in Form von Hubschrauber, Multikopter oder Convertiplanes, auch landläufig als Drohnen bezeichnet und im weiteren allgemein als unbemannte Flugplattformen, UAV (unmanned air vehicle) genannt werden, eignen sich zur konturgetreuen Befliegung von Bauwerken aller Art. In an sich bekannter Weise vermögen derartige UAV Nutzlasten in Form von fernsteuerbaren Kamerasysteme mit sich führen, um optikbasierte Prüfungen, in den meisten Fällen im sichtbaren Wellenlängenbereich an den jeweils zu inspizierenden Objekten vornehmen zu können (siehe hierzu Artikel von C. Eschmann, "Luftgestützte Inspektion mit unbemannten Flugsystemen", Internationale Datenbank für Bauwerke und Bauingenieure, Fraunhofer-IZFP, 2010, sowie N. Hallermann, G. Morgenthal, V. Rodehorst, "Luftbild-gestützte automatisierte Schadenserkennung an Betonoberflächen", zweite WTA-Kolloquium Betoninstandhaltung, Fulda, 2015.

Allen bekannten UAV-gestützten Inspektionssystemen ist gemein, dass die ferngesteuerten oder autonom navigierenden UAV's kontaktlos über größere Distanzen zu den jeweils zu inspizierenden Objekten positioniert oder längs vorgegebener Flugtrajektorien bewegt werden. Gleichwohl unter Verwendung von sehr hoch auflösenden, mitgeführten Kamerasystemen visuelle Außenaufnahmen von den zu untersuchenden Objekten mit einer sehr guten Detailwidergabe möglich ist, beschränken sich die Prüfaussagen ausschließlich auf die Oberflächenqualität der inspizierten Objekte. Weitergehende Prüftechniken, so insbesondere der Einsatz zerstörungsfreier Prüfverfahren, die Aussagen über eine Objektbeschaffenheit im Inneren des zu untersuchenden Objektes erlauben, jedoch zugleich auch einen sehr geringen Messabstand zum Objekt bzw. einen direkten Körperkontakt zwischen ZFPS und Prüfobjektoberfläche voraussetzen, sind mit den derzeit verfügbaren UAV nicht realisierbar, obwohl insbesondere bei sicherheitsrelevanten Objekten ein diesbezüglicher erhöhter Prüfbedarf besteht.

Beispiele für UAV-gestützte Inspektionssysteme, die Kameras zur Durchführung optikbasierter Oberflächenprüfungen nutzen, sind folgenden Druckschriften zu entnehmen: DE 20 2015 102 754 U1, US 2016/0144958 A1, CA 2777877 A1 sowie der US 2016/0052026 A1.

Die Druckschrift EP 2 983 259 A1 beschreibt ein flugfähiges Kabelanlageninspektionsfahrzeug, das ein als Multikopter ausgebildetes UAV umfasst, an dessen Tragrahmen zwei seriell hintereinander angeordnete, drehbar gelagerte Rollen angebracht sind, die vermittels des UAV von oben auf eine Überlandkabelanordnung aufsetzbar ist, längs der das UAV durch geeignete Rotorneigung bidirektional verfahrbar ist. Zusätzlich am Tragrahmen ist eine optische Kameraeinheit zur visuellen Inspektion der Kabelanordnung angebracht.

Die Druckschrift WO 2012/013878 A1 beschreibt ein UAV, an dem eine Art Stativarm angebracht ist, an dessen stirnseitigem Ende ein Ultraschallsensorkopf sitzt. Zur unterstützenden Oberflächenkontaktierung des Ultraschallsensorkopfes an die Oberfläche eines zu untersuchenden Objektes sind magnetische Kontakteinheiten vorgesehen. Das UAV koppelt nicht raumfest an dem Objekt an, vielmehr sind mechanische Entkopplungsmittel zwischen UAV und Stativarm vorgesehen, so dass Bewegungen des UAVs wie Rollen, Gieren, Nicken bzw. Horizontal- oder Vertikalbewegungen den Messvorgang nicht störend beeinflussen.

Die Druckschrift US 8874283 B1 offenbart ein UAV zur optischen Inspektion von Anlagen, die an einer vertikalen Fläche anlanden kann. Zu Anlagerung des UAVs bspw. an senkrecht orientieren Dampfrohren sind Magneteinheiten vorgesehen.

Die JP2012145346 beschreibt ein fliegendes System zur Bauwerksprüfung.

Die FR3003361 beschreibt ein Verfahren zur Steuerung eines fliegenden Inspektionssystems mit Hilfe eines auf das zu untersuchende Objekt projizierten Lichtpunktes.

### Darstellung der Erfindung

Der Erfindung liegt die Aufgabe zugrunde, ein System zum zerstörungsfreien Untersuchen eines über wenigstens eine frei zugängliche Oberfläche verfügenden dreidimensionalen Objektes, bspw. eines Gebäudes oder eine Industrieanlage, mit einem zu einem Schwebeflugzustand befähigten, unbemannten Luftfahrzeug, kurz UAV, an dem eine Inspektionseinheit sowie eine Kontaktvorrichtung angeordnet sind, über die ein lösbarer Kontakt zwischen dem UAV und der Oberfläche des Objektes herstellbar ist, derart weiterzubilden, so dass das Objekt mit einem zerstörungsfreien Prüfsensor, ZFPS, untersucht werden kann, der Objektinformationen aus dem Objektinneren zu generieren vermag. Das System soll in der Lage sein, in möglichst kurzer Zeit großbauende Objekte möglichst gesamtheitlich zu vermessen und Messsignale zu generieren, die für eine aussagekräftige, d. h. belastbare qualitative Objektzustandsbewertung geeignet sind.

Die Lösung der der Erfindung zugrundeliegenden Aufgabe ist im Anspruch 1 angegeben. Den Erfindungsgedanken in vorteilhafter Weise weiterbildende Vorteile sind Gegenstand der Unteransprüche sowie der weiteren Beschreibung unter Bezugnahme auf die Ausführungsbeispiele zu entnehmen.

Lösungsgemäß zeichnet sich das System zum zerstörungsfreien Untersuchen eines über wenigstens eine frei zugängliche Oberfläche verfügenden dreidimensionalen Objektes nach den Merkmalen des Oberbegriffes des Anspruches 1 dadurch aus, dass die Inspektionseinheit wenigstens einen zerstörungsfreien Prüfsensor, kurz ZFPS, umfasst, der Prüfsensorsignale erzeugt, die zumindest aus Bereichen des Objektes herrühren, die unter der Oberfläche liegen. Eine zusätzlich am UAV angebrachte Kontaktvorrichtung ist zur Ausbildung wenigstens einer lokalen Form-, Reib- und/oder Kraftschlussverbindung zur Oberfläche des Objektes befähigt, vermittels der das UAV raumfest an das Objekt lösbarfest ankoppelt. Unter einer raumfesten Ankopplung ist zu verstehen, dass die Kopplung keine Relativbewegungen zwischen dem UAV und dem zu untersuchenden Objekt zulässt. Im Idealfall wird das Eigengewicht des UAVs vollständig durch die raumfeste Kopplung abgefangen, so dass im Zustand der Kopplung der Schwebeflug des UAVs abgestellt werden könnte. Schließlich ist eine den wenigstens einen ZFPS mit dem UAV verbindende Tragstruktur vorgesehen, die den wenigstens einen ZFPS im Zustand einer raumfesten Kopplung des UAV's an das Objekt in einer bestimmt vorgegebenen Lage gegenüber der Oberfläche aktiv oder passiv positioniert.

Bei der Durchführung einer zerstörungsfreien Untersuchung an einem Objekt gilt es den ZFPS zu Zwecken einer korrekten Messsignaleinkopplung sowie -detektion in einer räumlich exakten Ausrichtung und Position relativ zur Oberfläche des zu untersuchenden Objektes anzuordnen. Handelt es sich um die Einkopplung von Schallwellen, bspw. in Form von Ultraschallwellen in das zu untersuchende Objekt sowie deren entsprechende Detektion, bspw. mit Hilfe elektro- oder magnetostriktiver Schallwandler, vorzugsweise in Form eines Piezowandlers, oder eines Schallemissionssensors oder Impact-Echosensors, so bedarf es zwischen dem ZFPS und der Objektoberfläche einen innigen körperlichen Kontakt. Nicht notwendigerweise jedoch in vorteilhafter Form gilt es elektromagnetische Ultraschallwandler sowie auch Wirbelstromsensoren, Mikrowellensensoren, Thermografiesensoren, Luftultraschallwandler, Laser-Ultraschallwandler, Radarsensoren, Mikromagnetik-Sensoren u. ä. möglichst oberflächennah, d.h. mit einem Abstand von wenigen Millimetern, bzw. oberflächenkontaktierend zu Messzwecken zu lagern, um möglichst fehlerfreie Messsignale erfassen und belastbare Messaussagen treffen zu können. Insbesondere bei dem Einsatz von multisensoriellen Prüfkopfsystemen, gilt es diese in einer vordefinierten Weise hinsichtlich Lage und Anpressdruck gegen die Oberfläche des zu untersuchenden Objektes zu fügen. Andere ZFPSen gilt es hingegen in einem vordefinierten minimalen Abstand und unter Zugrundelegung eines vordefinierten Bewegungsmusters lateral zur Oberfläche des zu inspizierenden Objektes zu verfahren.

Um den vorstehenden prüftechnischen Rahmenbedingungen zur Durchführung einer zerstörungsfreien Prüfung an einem dreidimensionalen Objekt mit Hilfe eines UAV-gestützten ZFPSs zu genügen, gilt es das UAV zumindest während einer Messung raumfest am Objekt zu positionieren. Hierzu dient eine am UAV angebrachte Kontaktvorrichtung, die über wenigstens eine mechanische Abstützstruktur verfügt, die einerseits am UAV angebracht ist und andererseits ein vom UAV abgewandtes Strukturende besitzt, an dem ein Kontaktmittel vorgesehen ist, das eine lokale Form-, Reib- und/oder Kraftschlussverbindung mit der Oberfläche des zu inspizierenden Objektes einzugehen in der Lage ist. Im einfachsten Fall handelt es sich bei der Abstützstruktur um wenigstens einen, vorzugsweise zwei, drei oder mehr stativartig vom UAV abstehenden, starren, stab- oder stangenförmigen Abstandshalter, der vom UAV abgewandt, stirnseitig endet und eine mechanisch stabile Auflagefläche besitzt, die zum Zwecke der Abstützung gegen die Oberfläche des Objektes durch den Propellervorschub des UAVs gedrückt wird. Besonders bevorzugt sind zwei, drei oder mehr derartige Abstandshalter, um auf diese Weise eine möglichst lagestabile Ankopplung des UAVs an die Oberfläche des zu untersuchenden Objektes zu ermöglichen.

Um die Haft- bzw. Haltekraft, die zwischen dem stirnseitigen Ende der wenigstens einen Abstützstruktur und der Oberfläche des Objektes wirkt, zu erhöhen, sieht eine bevorzugte Ausführungsform am stirnseitigen Ende des wenigstens einen Abstandshalter ein eine pneumatische Haftkraft generierendes Kontaktmittel, vorzugsweise in Form einer Saugnapfanordnung vor.

Das Kontaktmittel kann je nach Beschaffenheit und Material der Oberfläche des zu untersuchenden Objektes geeignet gewählt werden. Handelt es sich bspw. um ferromagnetische Objekte, so eignen sich schaltbare Elektromagnete als Kontaktmittel, anstelle der vorstehenden Saugnapfanordnung. Auch sind mechanische Funktionselemente als Kontaktmittel denkbar, die mit an der Oberfläche vorgesehenen Strukturen Formschlussverbindungen ausbilden können. Derartige mechanische Funktionselemente können als bloße passive Steckverbindungen oder als aktiv ansteuerbare Greifermechanismen ausgebildet sein.

In allen Fällen sorgt das UAV im Zustand der Ankopplung an der Oberfläche für den nötigen Auftrieb, der einen stabilen Schwebezustand ermöglicht und zusätzlich eine auf die Oberfläche des Objektes gerichtete Anpresskraft zur Stabilisierung der Messposition erzeugt. Neben dem Einsatz von auf dem Hubschrauberprinzip basierenden Multikoptern sind auch sog. Wandelflugzeuge (Convertiplanes) als UAV denkbar, die über die Querachse verschwenkbare Rotoren besitzen, die sowohl für den Auftrieb als auch Vortrieb des UAV's sorgen.

Zusätzlich zu der das UAV relativ zur Oberfläche des Objektes lagestabil ausrichtenden Abstützstruktur sieht das UAV ferner eine Tragstruktur vor, an der der wenigstens eine ZFPS angebracht ist, der somit eine eindeutige Relativlage zum UAV und im Kontaktfall zur Oberfläche relativ zum Objektes besitzt. Sobald das UAV an der Oberfläche des Objektes ankoppelt, befindet sich der wenigstens eine ZFPS in einer relativ zum Objekt vorgegebenen Messposition, d. h. entweder der wenigstens eine ZFPS kontaktiert die Oberfläche des Objektes oder ist minimal von dieser beabstandet angeordnet.

Die Tragstruktur ist vorzugsweise als starres Gebilde ausgebildet und verfügt optional über eine zusätzliche Bewegungseinheit zum Verschwenken bzw. Relativbewegen des wenigstens einen ZFPSs relativ zur Oberfläche des Objektes. Die zusätzlich an der Tragstruktur angebrachte Bewegungseinheit ist bspw. in Art einer Linearkinematik oder einer x/y-Stelleinheit ausgebildet und vermag den wenigstens einen ZFPS relativ zur Objektoberfläche ortsaufgelöst zu verfahren. Vorzugsweise sorgt eine zwischen der Bewegungseinheit und der Tragstruktur angebrachte kardanische Lagerung für eine optimale Ankopplung des wenigstens einen beweglich gelagerten ZFPSs an die Oberfläche des zu überprüfenden Objektes. Die Möglichkeit einer kontrollierten Auslenkung des ZFPSs unabhängig vom UAV erlaubt den ZFPS mit einer sehr hohen örtlichen Genauigkeit an der Oberfläche des Objektes zu positionieren und das Objekt mit einer hohen Ortsauflösung abzutasten. Die Größe des jeweiligen Untersuchungsbereiches ist von der Stellweite der Bewegungseinheit abhängig. Jedoch ist es möglich, durch stetiges Versetzen des UAV's relativ zur Oberfläche des Objektes die komplette Oberfläche des Objektes hochaufgelöst zu inspizieren.

Um das UAV zu navigieren eignen sich grundsätzlich an sich bekannte Funkfernsteuerungsmittel, mit denen durch manuelle Flugführung unmittelbaren Einfluss auf die Fluglage und -position genommen werden kann.

Eine bevorzugte Ausführungsform sieht eine vollständig autonome Flugführung des UAVs auf Basis von bekannten räumlichen Objekt- und Umgebungsinformationen sowie jenen Ortspositionen an der Objektoberfläche, an denen das Objekt zu untersuchen ist. Unter Zugrundelegung der vorgenannten Datenbasis wird zu Inspektionszwecken eines dreidimensionalen Objektes jener Oberflächenbereich oder jene Oberflächenstelle des Objektes mit Hilfe einer optischen Markierungseinheit, vorzugsweise mittels eines Lichtprojektor in Form eines Laserpointers o.ä., markiert, den bzw. die es zu inspizieren gilt und den das UAV selbständig anzufliegen hat. Die wenigstens eine mit Hilfe der optischen Markierungseinheit auf die Oberfläche des zu untersuchenden Objektes projizierte, kontrastreich in Erscheinung tretende Zielmarkierung wird mit Hilfe eines am UAV angebrachten Detektors, der zur raumaufgelösten Mustererkennung dient, erfasst. Die von Seiten des Detektors generierten Detektorsignale werden einem Flugsteuerungssystem zur autonomen Navigation des UAV weitergeleitet, das vorzugsweise am UAV angebracht ist. Das Flugsteuerungssystem steuert das UAV autonom an eine bestimmte räumliche Position relativ zur detektierten Zielmarkierung. Das Flugsteuerungssystem kann je nach Ausbildung vollständig am UAV angebracht sein oder zumindest teilweise in einer bodengebundenen Rechnereinheit verortet sein, die über entsprechende Kommunikationstechnik mit den UAV-getragenen Komponenten des Flugsteuerungssystems in Datenaustausch steht.

Zur exakten Ortsbestimmung des UAV's während des gesamten Einsatzes und insbesondere während der Messdurchführung am Objekt, um letztlich ortsaufgelöste Messsignale von dem zu inspizierenden Objekt zu erhalten, wird vorzugsweise ein Trackingsystem eingesetzt, das die räumliche Flugposition und Fluglage relativ des UAVs zum Objekt zu erfassen in der Lage ist. Vorzugsweise steht das Trackingsystem mit dem Flugsteuerungssystem in Datenaustausch, so dass von Seiten des Trackingsystems erfasste Ortsdaten zu Navigationszwecken genutzt werden können.

Art und Einsatz der Trackingtechnik sind an die örtlichen Gegebenheiten angepasst, d. h. sämtliche bodengebundenen Komponenten des Trackingsystems sind in einer geeigneten Lage zum Prüfobjekt aufzustellen. Typischerweise zeichnet sich ein an sich bekanntes Trackingsystem durch einen am UAV angebrachten Lichtsender aus, der Lichtimpulse emittiert, die von Seiten wenigstens zweier, stationär am Boden angeordneter Kamerasysteme erfasst und im Wege der Triangulation zu Zwecken der Positionsbestimmung ausgewertet werden. Auch alternative Trackingtechniken, wie bspw. georeferenzierte Lasertracker, die die Flugbahn des UAV's direkt verfolgen, können eingesetzt werden. Ebenso können zu Zwecken einer UAV-Ortsbestimmung auf Satellitensignal gestützte Systeme, wie bspw. GPS, DGPS, GLONAS und in Zukunft auch auf Galileo zurückgegriffen werden. Mit Hilfe der exakten Positionsbestimmung des UAV's und aufgrund der fest vorgegebenen Relativlage des wenigstens einen ZFPSs relativ zum UAV, kann die absolute Messposition des wenigstens einen ZFPSs bestimmt werden, so dass letztlich eine exakt ortsaufgelöste Messdatenbestimmung an dem zu inspizierenden Objekt möglich wird.

Vorzugsweise ist am UAV eine Kommunikationseinheit zur drahtlosen Datenübertragung an eine bodengebundenen Empfangs- und Auswerteeinheit vorgesehen, über die u.a. Messdaten inkl. Ortskoordinaten übertragen werden können. Als Datenübertragungstechnik bietet sich hierzu vorzugsweise die WLAN-Funktechnik an. Auch andere geeignete kabellose oder kabelgebundene Übertragungstechniken sind grundsätzlich denkbar und anwendbar. Alternativ oder in Kombination können sämtlich an Bord des UAVs erfassten Messdaten, Detektorbildsignale u.v.m. in einem am UAV mitgeführten Datenträger, bspw. in Form eines Flash-Speichers abgespeichert werden, der für eine nachträgliche Datenauswertung offline ausgelesen werden kann.

In einer weiteren bevorzugten Ausführungsform ist der am UAV angebrachte und zur ortsaufgelösten Mustererkennung der von Seiten der optischen Markierungseinheit projezierbaren Zielmarkierung geeignete Detektor als hochauflösende Kamera, bspw. CCD-Kamera ausgebildet und eignet sind auch zur optischen Erfassung der Oberfläche des Objektes. Anhand der von der Kamera aufgenommenen Bilddaten, die vermittels Bilddatenübertragung am Boden vor Ort durch eine Person in Augenschein genommen werden können, ist es möglich die Oberfläche auf Fehlstellen zu beurteilen, um möglicherweise als kritische Stellen beurteilte Oberflächenbereiche individuell anzufliegen, die nachfolgend einer genaueren Untersuchung unterzogen werden.

Zur genauen Untersuchung des Objektes dient der wenigstens eine am UAV vorgesehene ZFPS, der als Einzelsender ausgebildet sein kann. Durch Vorsehen mehrerer ZFPS gleicher oder unterschiedlicher Art können Informationen für eine verbesserte Qualitätsüberprüfung von dem Objekt gewonnen werden.
So stehen als ZFPS grundsätzlich die nachstehenden Sensoren zur Auswahl zur Verfügung, die einzeln oder in beliebiger Kombination am UAV angebracht werden können.
Elektro- oder magnetostriktive Schallwandler, wie beispielsweise piezoelektrische Schallwandler. So erfordern bspw. piezobasierte Ultraschallwandler sowohl zur Ultraschallwelleneinkopplung sowie auch -detektion einen mittel- oder unmittelbaren Körperkontakt zur Oberfläche des Objektes. Zudem gilt es im Falle von Piezoschall-Wandler ein Koppelmedium zwischen dem ZFPS-Kopf und der Oberfläche des Objektes einzubringen. Hierzu ist es erforderlich ein Koppelmedium am UAV mitzuführen, das zum Zwecke der Messung über eine Zuleitung zwischen dem ZFPS-Kopf und der Objektoberfläche einzubringen ist.

Gleichsam mittel- oder unmittelbar an die Oberfläche ankoppelnd zu lagern sind Schallemissionssensoren und Impakt-Echo-Sensor, mit denen über einen initialen mechanischen Impuls, der auf das Objekt gerichtet ist, das Objekt-interne Schallecho erfasst und analysiert wird.

Nicht notwendigerweise Oberflächenkontaktierend jedoch in unmittelbarer Nähe zur Oberfläche, d.h. mit einem Millimeter oder mehreren Millimetern Abstand sind die nahfolgenden ZFPS anzuordnen: Elektromagnetische Ultraschallwandler, kurz EMUS-Wandler, Wirbelstromsensor, Mikrowellensensor, Thermographiesensor, Luftultraschallwandler, Laser-Ultraschallwandler, Radarsensor, Mikromagnetik-Sensor,

Das lösungsgemäße System stellt ein multifunktionales Prüfsystem dar, das als flugfähiger Technologieträger aufzufassen ist, der verschiedene Funktionen und Technologien auf sich vereint, so bspw. autonome Navigations- und Positionierungstechnik, Kontaktierungstechnik, Ortungstechnik, Datentransfer- sowie auch zerstörungsfreie Prüfverfahrenstechnik. Das flugfähige System nimmt während der Messdurchführung durch Ausbildung eines Positions- und Lagestabilisierten Kontaktes zur Oberfläche des Objektes eine raumfeste Position ein und ermöglicht auf diese Weise großbauende Objekte entweder punktuell oder großflächig mit einer hohen örtlichen sowie auch messtechnischen Auflösung zu untersuchen. Das lösungsgemäße System kann sowohl alleine operieren als auch kooperierend mit weiteren lösungsgemäß aufgebauten UAVs im Schwarm agieren, wodurch sich weitere Vorteile ergeben, wie bspw. verkürzte Messzeiten um sehr groß bauende Objekte zu vermessen. Mehrere miteinander in Kommunikation und Datenaustausch stehende UAVs mit jeweils unterschiedlicher Sensorbestückung erlauben auch individuelle Messstrategien, die sich bspw. an verschiedenen Bereichen eines Objektes unterscheiden. Wird bspw. mittels einer Körperschall-Untersuchung eine Rissbildung im Volumeninneren des Objektes detektiert, so kann bspw. mit einer nachfolgenden Thermographie- und/oder Radioaktivitätsmessung, die ein anderes sensorbestücktes UAV vornimmt untersucht werden, ob sich in dem Riss bestimmte Volumenströme ausbreiten, die thermischer und/oder radioaktiver Natur sind.

Mit Hilfe wenigstens eines lösungsgemäß ausgebildeten UAVs werden schwer bzw. unzugängliche oder nur mit erheblichem Aufwand erreichbare Prüfpositionen an Anlagenteilen oder Bauwerken zugänglich und prüfbar. Die genaue Positionierung eines ZFPSs ist zum einen für die Detektion und Quantifizierung von aufgefundenen Materialfehlern an Objekten notwendig, zum anderen sind dabei auch Wiederholungsprüfungen möglich, um z. B. ein Risswachstum über einen längeren Nutzungszeitraum überwachen zu können.

Denkbar ist jedoch auch eine vom UAV abkoppelbare Anbringung des wenigstens einen ZFPSs an dem UAV. So wäre es möglich den ZFPS mit Hilfe des UAVs an eine Messstelle zu fliegen, vom UAV abzukoppeln und zugleich den ZFPS an die Oberfläche des Objektes mit Hilfe eines geeignet ausgebildeten Koppelmoduls anzukoppeln. In dieser Kombination verfügt das den wenigstens einen ZFPS aufweisende Koppelmoduls zumindest über eine eigene Energieversorgung. Auch eine zusätzliche am Koppelmodul angebrachte Kommunikationseinheit würde für eine Messdatenübermittlung zu einer vorzugsweise bodengebundene Empfangs-und Auswerteinheit sorgen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Lösungsgemäß ausgebildetes Systems zum gezielten Anfliegen einer markierten Prüfposition an der Oberfläche eines Objektes,
- Fig. 2,3,4: alternative Ausführungsbeispiele zum Andocken des Systems an der Oberfläche eines Objektes und
- Fig. 5: System zur örtlichen Feinjustage des ZFPSs.

### Wege zur Ausführung der Erfindung, gewerbliche Verwendbarkeit

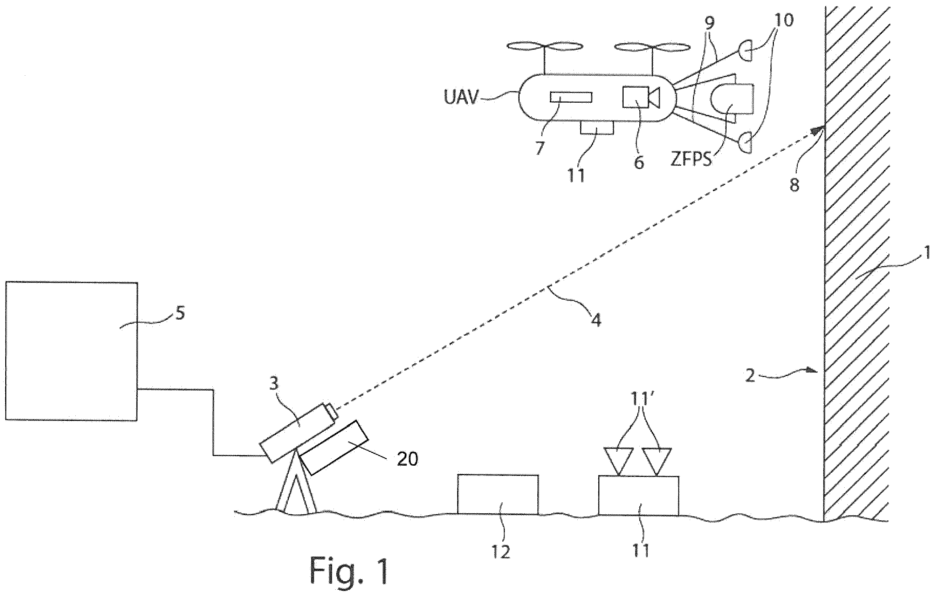

Figur 1 zeigt ein zu inspizierendes Objektes 1, das über eine frei zugängliche Oberfläche 2 verfügt, die es gilt mit einem zu einem Schwebeflugzustand befähigten unbemannten Luftfahrzeugt UAV, an dem wenigstens ein zerstörungsfreie arbeitender Prüfsensor ZFPS angeordnet ist, zu inspizieren. Die Oberfläche 2 soll die Fassade eines Bauwerkes illustrieren.

Zunächst wird wenigstens ein zu untersuchender Oberflächenpunkt oder -bereich festgelegt, den es mit Hilfe des wenigstens einen ZFPS zu inspizieren gilt. Dies erfolgt typischerweise auf der Grundlage von Prüfobjektkonstruktionsdaten sowie auf der Basis von Belastungskollektiven. Die Ermittlung zumeist einer Vielzahl von zu untersuchenden Messpositionen kann automatisiert oder durch entsprechende manuelle Eingabe durch einen Bediener erfolgen.

Um das UAV an eine, bspw. auf Basis eines festgelegten Inspektionsplanes definierte Position gegenüber der Oberfläche 2 des Objektes 1 zu navigieren, und dies möglichst autonom, d. h. ohne personelle Unterstützung, ist eine bodengestützte optische Markierungseinheit 3, vorzugsweise in Form eines Laserprojektors, vorgesehen. Die optische Markierungseinheit 3 ist derart gegenüber dem zu inspizierenden Objekt 1 positioniert, so dass der projizierte Laserstrahl 4 ungehindert auf die zu untersuchende Oberfläche des Objektes 1 auftrifft. Die genaue Position der vermittels der optischen Markierungseinheit 3 auf der Oberfläche 2 kontrastreich in Erscheinung tretenden Zielmarkierung 8 wird von einem Steuergerät 5 festgelegt, das die Markierungseinheit 3 ansteuert. Die wenigstens eine auf die Objektoberfläche projizierte Zielmarkierung 8 dient dem UAV die vorgewählte Prüfposition autonom anzufliegen. Das UAV, das vorzugsweise als Multikopter ausgebildet ist, verfügt hierzu über einen Detektor 6, vorzugsweise in Form einer ortsauflösenden Kamera, die mit einem bordeigenen Flugsteuerungssystem 7 verbunden ist, so dass das UAV nach Detektion des vermittels der Markierungseinheit 3 an die Wand 2 des Objektes 1 projizierten Zielmarkierung 8 selbständig diesem annähert und eine definierte Messposition zu Zielmarkierung 8 einnimmt.

In Fällen, in denen die Distanz zwischen dem Startort des UAVs, der sich zumeist im Bereich der optischen Markierungseinheit befindet, und der durch die Zielmarkierung definierten Messposition groß ist, ist nicht gewährleistet, dass die UAV gestützte ortsauflösende Kamera die Zielmarkierung bereits am Startort zu erfassen vermag. Vielmehr bedarf es in diesem Fällen zunächst einer gewissen Annäherung des UAVs an den Bereich der Zielmarkierung, so dass die ortsauflösende Kamera die Zielmarkierung für eine weitere autonome Annäherung des UAVs an das Objekt sicher erfassen kann.

Um den Annäherungsflug des UAVs vom Startort Richtung Zielmarkierung möglichst direkt, autonom, zeit- und kostensparend durchzuführen, sieht eine bevorzugte Variante den Einsatz einer die Flugdistanz und Flugrichtung bestimmenden Messeinrichtung 20 vor, die vorzugsweise am oder in unmittelbarer Nähe zum Startort positioniert ist. Eine derartige Messeinrichtung 20 stellt beispielweise ein in der Geodäsie häufig verwendeter Tachymeter dar. Ein Tachymeter ist ein Gerät, mit dem man Horizontalrichtungen, Vertikalwinkel und - anders als mit einem Theodoliten - auch die Schrägstrecke, d.h. die schräg gemessene Entfernung zum Zielpunkt ermitteln kann.

Sind vor dem Start des UAVs Flugdistanz und Flugrichtung bekannt, so können diese Daten dem bordeigenen Flugsteuerungssystem 7 übermittelt werden, das das UAV autonom auf kürzestem Weg vom Startort zum Bereich der Messposition fliegt.

Vorzugsweise kann das Tachymeter 20 die Funktion der optischen Markierungseinheit 3 übernehmen oder ergänzend an der optischen Markierungseinheit 3 zusätzlich vorgesehen werden.

Hat das UAV die vorgewählte Messposition erreicht, dockt es an der Oberfläche 2 an und hält sich daran fest. Dies ist notwendig, um zum einen die Messposition während der Messung exakt einzuhalten und zum anderen Prüfungen, die eine gewisse Anpresskraft des ZFPS an die Oberfläche 2 benötigen, durchführen zu können.

Das UAV verfügt hierzu über eine Kontaktvorrichtung 8, die im dargestellten Fall der Figur 1 zwei starr mit dem UAV verbundene, stabartig ausgebildete Abstützstrukturen 9 umfasst, an deren dem Objekt zugewandten stirnseitigen Enden Kontaktmittel 10 angebracht sind, die im unmittelbaren Oberflächenkontakt zur Oberfläche 2 treten, sobald das UAV die Messposition einnimmt.

Ferner ist der wenigstens eine ZFPS über eine Tragstruktur 11 raumfest mit dem UAV verbunden, so dass im Falle der Messdurchführung der wenigstens eine ZFPS kontaktierend an der Oberfläche 2 des Objektes anliegt oder dicht über der Oberfläche 2 positioniert ist.

Während der Messdurchführung verharrt das UAV 1 im Schwebezustand und nimmt gegenüber der Oberfläche 2 eine unveränderte Raumposition ein. Sobald die Messung beendet ist, entfernt sich das UAV und nimmt je nach Inspektionsplan eine neue Messposition ein, die anhand der Markierungseinheit 3 vermittels der auf die Oberfläche 2 projizierten Zielmarkierung 8 vorgegeben wird. Da sich das UAV in dieser Phase bereits nahe dem Objekt aufhält und in aller Regel sich eine neue Zielposition, die durch die Zielmarkierung angezeigt wird, in räumlicher Nähe zur zuletzt markierten Zielposition befindet, vermag die bordeigene ortsauflösende Kamera die neu positionierte Zielmarkierung selbstständig zu erfassen, sodass das UAV den Zielanflug autonom vornehmen kann.

Um die exakte Raumposition des UAV's und des starr mit diesem verbundenen ZFPSs bestimmen zu können ist zusätzlich ein Trackingsystem 11 vorgesehen. Im einfachsten Fall dient hierzu ein am UAV angebrachter, Satellitensignal gestützter Orts-Sensor, bspw. GPS-Sensor, dessen Sensorsignale zur weiteren Auswertung einer bodengestützten Auswerteeinheit 12 zuführbar sind. Zum Zwecke der Datenübertragung eignet sich vorzugsweise WLAN-Technik.

Alternativ zu oder in Kombination mit einem UAV gestützten GPS-Sensor zur Positionsbestimmung bietet sich ein optisches Trackingsystem 11 an, das eine Lichtimpulse emittierende Lichtquelle vorsieht, die am UAV angebracht ist und deren Lichtimpulse mit Hilfe wenigstens zweier bodengestützter, stationärer ortsauflösender Kameras 11' detektiert und mittels Triangulation ausgewertet werden. Auf diese Weise können aufgrund der starren Verbindung zwischen dem UAV und dem ZFPS hoch ortsaufgelöst Messdaten von einem zu untersuchenden Objekt 1 generiert werden. Auch der Einsatz weiterer Tracking-Techniken, wie bspw. eines georeferenzierten Lasertrackes, der die Flugbahn des UAVs direkt verfolgt, sind möglich.

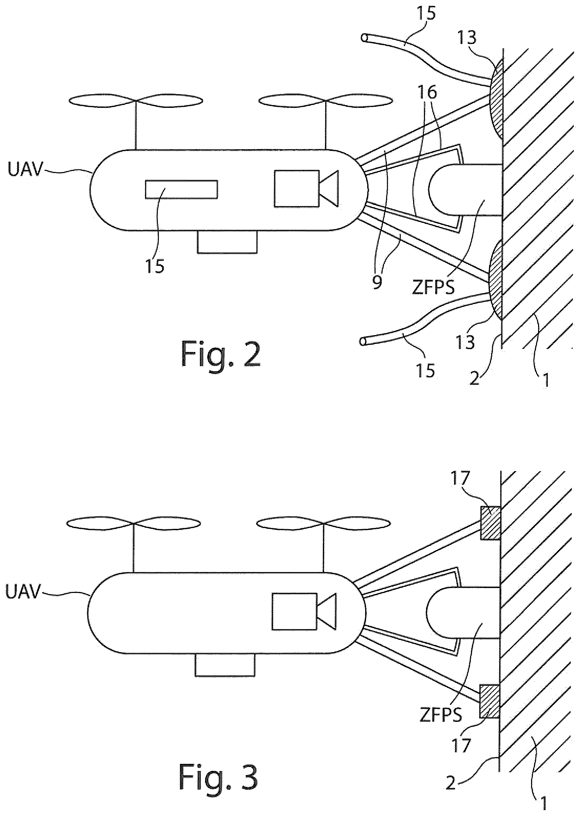

Das in Figur 2 detaillierter dargestellte UAV verfügt zum Zweck des Andockens an die Oberfläche 2 des Objektes 1 zwei stabförmig ausgebildete Abstützstrukturen 9, an deren Enden jeweils ein Vakuumsaugnapf 13 angebracht ist. Die Vakuumsaugnäpfe 13 sind jeweils über eine Vakuumleitung 14 mit einer Unterdruckquelle 15 verbunden, die am UAV angeordnet ist. Durch die unterdruckgespeiste Haftkraft ist das UAV raumfest zur Oberfläche 2 fixiert. Durch die starre Ausbildung der Abstützstrukturen 9 ist zudem der Abstand zwischen dem UAV und der Oberfläche 2 festgelegt. Besonders zweckmäßig ist eine Abstützstruktur 9 in Art eines Tripods, die über drei Auflagestellen einen stabilen und weitgehend selbstausrichtenden Oberflächenkontakt zwischen UAV und Objekt 1 herstellt.

Der wenigstens eine ZFPS ist in dem gezeigten Ausführungsbeispiel über eine starr ausgebildete Tragstruktur 16 mit dem UAV derart fest verbunden, so dass im angekoppelten Zustand zwischen Oberfläche 2 und UAV der ZFPS die Oberfläche 2 des Objektes 1 punktuell oder flächig, je nach Ausgestaltung des Prüfkopfes, und kraftbeaufschlagt kontaktiert. Eine derartige Prüfkopfkontaktierung ist erforderlich bei ZFPSs in Form eines piezoelektrischen Ultraschallwandlers, Schallemissionswandlers oder Impact-Echowandlers. Sollte beim Prüfeinsatz bspw. das piezobasierte Ultraschallverfahren angewandt werden, das ein Koppelmedium, bspw. Wasser oder Gel, zwischen dem ZFPS und der Oberfläche 2 des Objektes1 erfordert, gilt es ein entsprechendes Reservoir am UAV vorzusehen, aus dem das Koppelmedium über eine Zuführleitung an den Kontaktort zwischen Oberfläche 2 und ZFPS gefördert werden kann. Im Falle von Nicht-notwendigerweise-kontaktierenden ZFPSs, wie bspw. EMUS, Wirbelstromsensor, Thermographiesensor, Luftultraschallwandler, Laser-Ultraschallwandler, Radarsensor, Mikromagnetik-Sensor, etc. ist der Abstandshalter entsprechend verkürzt ausgebildet.

Figur 3 illustriert ein ähnlich ausgebildetes UAV wie in Figur 2, jedoch sind anstelle der Vakuumsaugnäpfe 13 Magnetfüße 17 am stirnseitigen Ende der starren Abstützstruktur 9 angebracht. Handelt es sich bei dem zu untersuchenden Objekt 1 um ein Objekt das ferromagnetische Materialanteile enthält, so kann die Haft- und Haltekraft mit Hilfe geeignet ausgebildeter Magnetfüße 17 realisiert werden.

Grundsätzlich können die zum Zwecke der Ausbildung einer Form-, Reib- und/oder Kraftschlussverbindung ausgebildeten Kontaktmittel 10 in Abhängigkeit der Oberflächen- und Materialbeschaffenheit des jeweils zu untersuchenden Objektes geeignet gewählt werden.

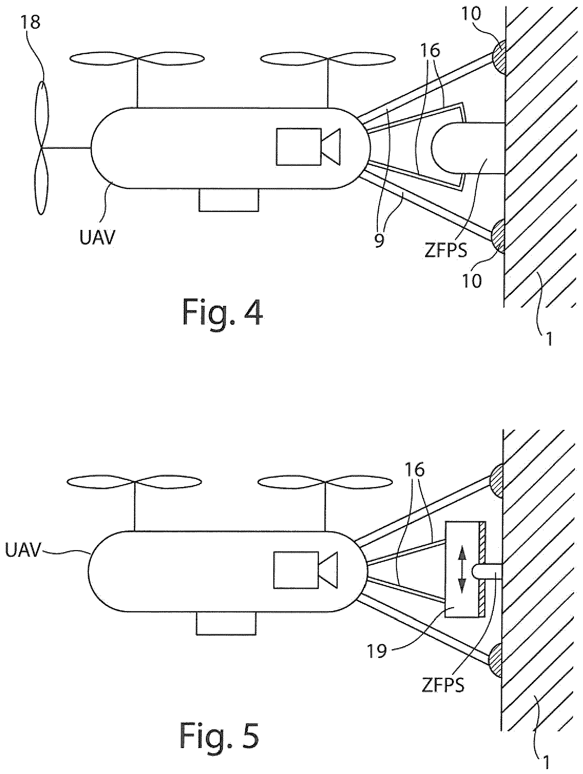

Figur 4 illustriert eine Unterstützung der Haft- und Haltekraft zwischen den stirnseitig an der Abstützstruktur 9 angebrachten Kontaktmittel 10 und der Oberfläche 2 vermittels eines zusätzlichen, am UAV angebrachten Heckrotors 18, der bei Erreichen der Messposition einen zusätzlichen Anpressdruck zur Stabilisierung der Messposition generiert.

Figur 5 illustriert ein UAV, an dem an der Tragstruktur 16 eine Manipulatoreinheit 19 angebracht ist, durch die der an dieser angebrachte ZFPS beweglich gegenüber der Oberfläche angebracht ist. Je nach Ausbildung der Manipulatoreinheit 16 lässt die der ZFPS kontrolliert parallel und/oder orthogonal zur Oberfläche verfahren während das UAV eine feste Raumposition relativ zum Objekt1 einnimmt. So kann davon ausgegangen werden, dass insbesondere bei großen Objekten 1 eine millimetergenaue Positionierung das UAVs sehr schwierig oder gar nicht zu erreichen ist. Die zwischen dem UAV und dem ZFPS angebrachte Manipulatoreinheit 19 sorgt für eine Millimeter genaue Positionierung des ZFPS. Vorzugsweise ist zu Zwecken einer optimalen Sensorankopplung des ZFPSs an der Oberfläche 2 des Objektes 1 der ZFPS zusätzlich über eine kardanische Lagerung mit dem UAV verbunden.

Die Manipulatoreinheit 19 bietet darüber hinaus die Möglichkeit kleinere Oberflächenausschnitte mit einer hohen Ortauflösung abzutasten. Die Größe der einzelnen messtechnisch erfassten Oberflächenausschnitte ist von der Manipulatorgröße abhängig. Durch stetiges Versetzen des UAVs kann die vollständige Objektoberfläche hochaufgelöst erfasst und im Rahmen einer nachträglichen, die einzelnen Messbereiche zusammenfügenden softwaregestützten Auswertung untersucht werden.

### Bezugszeichenliste

- 1: Objekt
- 2: Oberfläche
- 3: Optische Markierungseinheit
- 4: Laserstrahl
- 5: Steuereinheit
- 6: Detektor
- 7: Flugsteuerungssystem
- 8: Kontaktvorrichtung
- 9: Abstützstruktur
- 10: Kontaktmittel
- 11: Trackingsystem
- 11': Kamera
- 12: Auswerteeinheit
- 13: Vakuumsaugnapf
- 14: Vakuumleitung
- 15: Unterdruckquelle
- 16: Tragstruktur
- 17: Magnetfuß
- 18: Heckrotor
- 19: Manipulatoreinheit
- 20: Tachymeter

## Patentansprüche

1. System zum zerstörungsfreien Untersuchen eines über wenigstens eine frei zugängliche Oberfläche (2) verfügenden dreidimensionalen Objektes (1), mit einem zu einem Schwebeflugzustand befähigten unbemannten Luftfahrzeug, kurz UAV, an dem eine Inspektionseinheit, die wenigstens einen zerstörungsfreien Prüfsensor, kurz ZFPS, umfasst, der Prüfsensorsignale erzeugt, die zumindest aus Bereichen des Objektes (1) herrühren, die unter der Oberfläche (2) liegen,
wobei eine Kontaktvorrichtung (8) am UAV angeordnet ist, über die ein lösbarer Kontakt in Form einer Form-, Reib- und/oder Kraftschlussverbindung zwischen dem UAV und der Oberfläche (2) des Objektes (1) herstellbar ist, über die das UAV raumfest an das Objekt (1) ankoppelt, dass eine den wenigstens einen ZFPS mit dem UAV verbindende Tragstruktur (16) vorgesehen ist, die den wenigstens einen ZFPS im Zustand einer raumfesten Kopplung des UAVs in einer bestimmt vorgebbaren Lage gegenüber der Oberfläche (2) aktiv oder passiv positioniert, **dadurch gekennzeichnet,**
**dass** die Kopplung keine Relativbewegung zwischen dem UAV und dem zu untersuchenden Objekt (1) zulässt,
**dass** eine optische Markierungseinheit (3) derart separat zum UAV angeordnet ist, dass die optische Markierungseinheit (3) ein Muster an der Oberfläche (2) des Objektes (1) zu Zwecken einer Detektion ausreichend kontrastreich zur Darstellung bringt, und
**dass** zur autonomen Navigation des UAV an eine bestimmte Position relativ zu dem detektierbaren Muster am UAV ein Detektor (6) zur raumaufgelösten Mustererkennung sowie wenigstens ein Teil des Flugsteuerungssystems (7) angebracht sind.

2. System nach Anspruch 1,
**dadurch gekennzeichnet, dass** der wenigstens eine ZFPS aus den nachstehenden Gruppen von Sensoren gewählt ist:
elektro- oder magnetostriktiver Schallwandler, elektromagnetischer Ultraschallwandler, Wirbelstromsensor, Mikrowellensensor, Thermographiesensor, Luftultraschallwandler, Laser-Ultraschallwandler, Radarsensor, Mikromagnetik-Sensor, Schallemissionssensor, Impakt-Echo-Sensor

3. System nach Anspruch 1 oder 2,
**dadurch gekennzeichnet, dass** eine Steuereinheit (5) vorgesehen ist, die die optische Markierungseinheit (3) zur Darstellung und Positionierung des Musters auf der Oberfläche (2) ansteuert.

4. System nach einem der Ansprüche 1 bis 3,
**dadurch gekennzeichnet, dass** ein die räumliche Flugposition und Fluglage relativ zum Objekt (1) erfassendes Trackingsystem (11) vorgesehen ist, und
dass das Trackingsystem (11) mit dem Flugsteuerungssystem (7) in Datenaustausch steht.

5. System nach einem der Ansprüche 1 bis 4,
**dadurch gekennzeichnet, dass** die Kontaktvorrichtung (8) wenigstens eine mechanische mit dem UAV verbundene Abstützstruktur (9) aufweist, die wenigstens ein vom UAV abgewandtes Strukturende besitzt, an dem ein die lokale Form-, Reib-und/oder Kraftschlussverbindung mit der Oberfläche (2) ausbildendes Kontaktmittel (10) angebracht ist.

6. System nach Anspruch 5,
**dadurch gekennzeichnet, dass** das Kontaktmittel (10) eine an der Oberfläche (2) wirkende pneumatische und/oder magnetische Haftkraft auszubilden in der Lage ist.

7. System nach einem der Ansprüche 1 bis 6,
**dadurch gekennzeichnet, dass** die Tragstruktur (16) als passive, starre Einheit ausgebildet ist, oder dass die Tragstruktur (16) zumindest eine den wenigstens einen ZFPS relativ zum UVA kontrolliert auslenkbare Kinematik umfasst.

8. System nach einem der Ansprüche 1 bis 7,
**dadurch gekennzeichnet, dass** ein geodätischer Tachymeter (20) vorgesehen ist, zur Ermittlung von Entfernung und Richtung von einem bodengestützten Ort des Tachymeters (20) und dem an der Oberfläche (2) des Objektes (1) kontrastreich in Erscheinung tretendes optisch wahrnehmbares Muster, und
dass die ermittelte Entfernung und Richtung dem Flugsteuerungssystem (7) übermittelbar sind.

9. System nach Anspruch 8,
**dadurch gekennzeichnet, dass** der geodätische Tachymeter (20) Teil der optischen Markierungseinheit (3) ist oder am Ort oder nahe der optischen Markierungseinheit (3) angebracht ist.

## Claims

1. System for non-destructive testing of a three-dimensional object (1) which has at least one freely accessible surface (2) with an unmanned aerial vehicle, abbreviated to UAV, which has been made capable of hovering flight, on which an inspection unit comprising at least one non-destructive inspection sensor, abbreviated to ZFPS, generates test sensor signals which originate at least from regions of the object (1) that lie below the surface (2), wherein a contact apparatus (8) is arranged on the UAV, by means of which a releasable contact in the form of a positive locking, friction locking and/or non-positive locking connection can be created between the UAV and the surface (2) of the object (1), via which the UAV couples in spatially fixed manner to the object (1),
that a support structure (16) connecting the at least one ZFPS to the UAV is provided, which actively or passively positions the at least one ZFPS in the state of a spatially fixed coupling of the UAV in a predeterminable position relative to the surface (2), **characterized in that** the coupling allows no relative movement between the UAV and the object (1) that is to be examined,
that an optical marking unit (3) is arranged separately from the UAV in such manner that the optical marking unit (3) causes a pattern to appear on the surface (2) of the object (1) with sufficiently high contrast for purposes of detection, and
that a detector (6) for spatially resolved pattern recognition and at least a part of the flight control system (7) are fitted on the UAV to enable autonomous navigation of the UAV to a specified position relative to the detectable pattern.

2. System according to Claim 1,
**characterized in that** the at least one ZFPS is selected from the following groups of sensors:
electromagnetic or magnetostrictive sound transducer,
electromagnetic ultrasonic transducer, eddy current sensor, microwave sensor, thermography sensor, air ultrasonic transducer, laser ultrasonic transducer, radar sensor, micromagnetics sensor, acoustic emission sensor, impact echo sensor.

3. System according to Claim 1 or 2,
**characterized in that** a control unit (5) is provided, which actuates the optical marking unit (3) for displaying and positioning the pattern on the surface (2).

4. System according to any one of Claims 1 to 3,
**characterized in that** a tracking system (11) is provided which captures the spatial flight position and attitude relative to the object (1), and
that the tracking system (11) is in data exchange communication with the flight control system (7).

5. System according to any one of Claims 1 to 4,
**characterized in that** the contact apparatus (8) has at least one mechanical support structure (9) that is connected to the UAV, which has at least one structural end facing away from the UAV, to which a contact means (10) forming the local positive locking, friction locking and/or non-positive locking connection with the surface (2) is attached.

6. System according to Claim 5,
**characterized in that** the contact means (10) is capable of producing a pneumatic and/or magnetic adhesive force that acts on the surface (2).

7. System according to any one of Claims 1 to 6,
**characterized in that** the support structure (16) is embodied as a passive, rigid unit, or that the support structure (16) comprises at least one deflectable kinematics system that controls the at least one ZFPS relative to the UVA.

8. System according to any one of Claims 1 to 7,
**characterized in that** a geodetic tachymeter (20) is provided for determining distance and direction from a ground-based location of the tachymeter (20) and the visually perceptible pattern appearing in high contrast on the surface (2) of the object (1), and
that the determined distance and direction can be transferred to the flight control system (7).

9. System according to Claim 8,
**characterized in that** the geodetic tachymeter (20) is part of the optical marking unit (3) or is attached to or near the optical marking unit (3).

## Revendications

1. Système pour l'examen non destructif d'un objet tridimensionnel (1) disposant d'au moins une surface librement accessible (2), comportant un aéronef sans pilote, ou UAV en abréviation, capable de planer, sur lequel une unité d'inspection comprend au moins un capteur d'essai non destructif, ou ZFPS en abréviation, qui génère des signaux de capteur de test qui proviennent au moins de zones de l'objet (1) qui se trouvent sous la surface (2), dans lequel un dispositif de contact (8) est disposé sur l'UAV, par l'intermédiaire duquel un contact réversible sous forme de liaison par conjonction de forme, de force et/ou friction peut être établi entre l'UAV et la surface (2) de l'objet (1), par l'intermédiaire duquel l'UAV est fixé spatialement à l'objet (1),
en ce que au moins une structure porteuse (16) est prévue qui relie le au moins un ZFPS à l'UAV, qui positionne activement ou passivement au moins un ZFPS à l'état d'un couplage spatialement fixe de l'UAV dans une position prédéterminée par rapport à la surface (2), **caractérisé en ce que** le couplage ne permet pas d'examiner tout mouvement relatif entre l'UAV et l'objet (1),
qu'une unité de marquage optique (3) est disposée séparément de l'UAV de telle manière que l'unité de marquage optique (3) affiche un motif sur la surface (2) de l'objet (1) avec un contraste suffisant aux fins de détection, et
**en ce que** pour la navigation autonome de l'UAV vers une position spécifique par rapport au motif détectable sur l'UAV, un détecteur (6) pour la reconnaissance de motif à résolution spatiale et au moins une partie du système de commande de vol (7) sont montés.

2. Système selon la revendication 1,
**caractérisé en ce que** le au moins un ZFPS est sélectionné parmi les groupes de capteurs suivants:
transducteur électro ou magnétostrictif, transducteur électromagnétique à ultrasons, capteur à courants de Foucault, capteur à micro-ondes, capteur de thermographie, transducteur à ultrasons à air, transducteur à ultrasons à laser, capteur radar, capteur micromagnétique, capteur d'émission sonore, capteur d'écho d'impact.

3. Système selon la revendication 1 ou 2,
**caractérisé en ce qu'**une unité de commande (5) est prévue qui commande l'unité de marquage optique (3) pour afficher et positionner le motif sur la surface (2).

4. Système selon une des revendications 1 à 3,
**caractérisé en ce qu'**il est prévu un système de suivi (11) qui détecte la position spatiale de vol et l'attitude par rapport à l'objet (1), et
que le système de suivi (11) échange des données avec le système de commande de vol (7).

5. Système selon une des revendications 1 à 4,
**caractérisé en ce que** le dispositif de contact (8) présente au moins une structure de support mécanique (9) reliée à l'UAV, qui présente au moins une extrémité de structure tournée à l'opposé de l'UAV, à laquelle une liaison locale par conjonction de forme, de force et/ou friction avec les moyens de contact (10) constituant la surface (2) est appliquée.

6. Système selon la revendication 5,
**caractérisé en ce que** le moyen de contact (10) est apte à former une force d'adhérence pneumatique et/ou magnétique agissant sur la surface (2).

7. Système selon une des revendications 1 à 6,
**caractérisé en ce que** la structure porteuse (16) est conçue comme une unité passive et rigide, ou **en ce que** la structure porteuse (16) comprend une cinématique déflectable de manière contrôlée par rapport à l'UVA d'au moins un ZFPS.

8. Système selon une des revendications 1 à 7,
**caractérisé en ce qu'**un tachymètre géodésique (20) est prévu pour déterminer la distance et la direction à partir d'un emplacement au sol du tachymètre (20) et du motif optiquement perceptible apparaissant avec un contraste élevé sur la surface (2) de l'objet (1), et
que la distance et la direction déterminées peuvent être transmises au système de commande de vol (7).

9. Système selon la revendication 8,
**caractérisé en ce que** le tachymètre géodésique (20) fait partie de l'unité de marquage optique (3) ou est monté à l'emplacement de ou à proximité de l'unité de marquage optique (3).
